# NEUE EUROPÄISCHE PATENTSCHRIFT

(11) **EP 1 478 542 B2**
(45) Veröffentlichungstag und Bekanntmachung des Hinweises auf die Entscheidung über den Einspruch: **27.03.2013**
(45) Hinweis auf die Patenterteilung: 18.11.2009
(21) Anmeldenummer: 02776753.2
(22) Anmeldetag: 27.09.2002
(51) Int. Cl.: B60K 31/00, G01S 13/93, G08G 1/16, B60T 7/12

(54) **VORRICHTUNG UND VERFAHREN ZUR ADAPTIVEN GESCHWINDIGKEITSREGELUNG EINES KRAFTFAHRZEUGS**
ADAPTIVE CRUISE CONTROL DEVICE AND METHOD FOR A MOTOR VEHICLE
DISPOSITIF ET PROCEDE DE REGULATION ADAPTATIVE DE LA VITESSE D'UN VEHICULE A MOTEUR

(30) Priorität: 22.02.2002 DE 10207580
(43) Veröffentlichungstag der Anmeldung: 24.11.2004
(73) Patentinhaber: ROBERT BOSCH GMBH, 70442 Stuttgart (DE)
(72) Erfinder: SWOBODA, Hans-Christian, 71522 Backnang (DE); IRION, Albrecht, 70563 Stuttgart (DE); JOHN, Dirk, 71229 Leonberg (DE)
(86) Internationale Anmeldenummer: PCT/DE2002/003698
(87) Internationale Veröffentlichungsnummer: WO 2003/072386

(56) Entgegenhaltungen:
- EP-A- 0 657 857
- EP-A- 0 716 949
- EP-A1- 0 605 104
- WO-A-00/36435
- DE-A- 10 030 258
- DE-A1- 10 007 501
- DE-A1- 19 945 250
- US-A- 5 999 874
- US-A1- 2001 039 472
- US-B1- 6 337 638

## Beschreibung

Es wird ein Verfahren und eine Vorrichtung zur adaptiven Geschwindigkeitsregelung eines Kraftfahrzeugs im Sinne einer Abstandskonstantregelung bzw. einer Geschwindigkeitskonstantregelung vorgeschlagen, die mindestens zwei Einrichtungen umfaßt, die mittels einer Datenaustauscheinrichtung miteinander verbunden sind. Die erste Einrichtung weist mindestens eine Sende- und Empfangseinheit zur Detektion von Objekten auf, die nach dem Radar- und/oder Lidarprinzip arbeitet sowie mindestens eine Zielobjektauswahleinrichtung auf. Die zweite Einrichtung weist mindestens einen Geschwindigkeits- und Abstandsregler auf und ist mit der ersten Einrichtung mittels eines Datenaustauschsystems verbunden, mittels dem Daten bezüglich zweier detektierter Objekte übertragen werden.

### Stand der Technik

Aus der EP 0 716 949 B1 ist ein Verfahren und eine Vorrichtung gemäß dem Oberbegriff der unabhängigen Ansprüche bekannt.

Aus der Veröffentlichung "Adaptive Cruise Control System Aspects and Development Trends" von Winner, Witte et al., veröffentlicht auf der SAE International Congress & Exposition, Detroit, 26.-29. Februar 1996 ist ein adaptiver Geschwindigkeitsregler bekannt, der mittels Radarstrahlung vorherfahrende Fahrzeuge erkennt und in Abhängigkeit der erkannten Objekte eine Abstands- oder Geschwindigkeitsregelung vornimmt. Aus dieser Veröffentlichung ist bekannt, ein derartiges Gerät so aufzubauen, dass die Radareinrichtung, die Zielobjektauswahl sowie der Abstands- und Geschwindigkeitsregler in einem gemeinsamen Gehäuse untergebracht sind.

Aus der Veröffentlichung "Auf eigene Verantwortung" von E. Kittler, veröffentlicht in der Zeitschrift mot 2/2000, Seite 74 bis 76 ist ein Abstandsregeltempomat bekannt, bei dem der auf Radarbasis arbeitende Abstandssensor sowie das Steuergerät zur Abstands- und Geschwindigkeitsregelung getrennt in einem Fahrzeug vorgesehen sind.

Es wird weiter auf die EP-A-0 657 857 verwiesen. Kern und Vorteile der Erfindung

Die Erfindung ist durch die Ansprüche definiert. Kern der vorliegenden Erfindung ist ein System zur adaptiven Geschwindigkeitsregelung eines Kraftfahrzeugs im Sinne einer Abstandskonstantregelung bzw. einer Geschwindigkeitskonstantregelung, das aus zwei Einrichtungen besteht, die untereinander mittels einer Datenaustauscheinrichtung verbunden sind. Die erste Einrichtung umfaßt mindestens eine Objektdetektionseinrichtung sowie mindestens eine Zielobjektauswahleinrichtung. Die Objektdetektionseinrichtung ist in der Lage, weitere Fahrzeuge und Objekte in der Umgebung des eigenen Fahrzeugs zu erkennen sowie deren charakteristische, kinematische Größen zu messen. In der Zielobjektauswahleinrichtung der ersten Einrichtung werden aus den detektierten Objekten genau zwei Objekte ausgewählt und die charakteristischen, kinematischen Größen dieser beiden ausgewählten Objekte zur weiteren Verarbeitung an eine zweite Einrichtung weitergeleitet, die mindestens einen Abstands- und Geschwindigkeitsregler umfaßt. Dieser Abstands- und Geschwindigkeitsregler erzeugt aus den charakteristischen, kinematischen Größen der beiden ausgewählten, detektierten Objekte Ausgangssignale, mit denen eine leistungsbestimmende Stelleinrichtung einer Brennkraftmaschine oder ein Stellglied der Verzögerungsmittel angesteuert werden kann. Durch die Auswahl von genau zwei Objekten durch die Zielobjektauswahleinrichtung und die Übertragung der zugehörigen charakteristischen, kinematischen Größen an den Abstands- und Geschwindigkeitsregler wird das Datenaufkommen zwischen der ersten Einrichtung und der zweiten Einrichtung gering gehalten. Bekannte Systeme übertragen zwischen der ersten Einrichtung und der zweiten Einrichtung entweder alle detektierten Objektdaten, was zu einer sehr großen Fülle an übertragenen Daten führen kann obwohl ein Großteil der erkannten Objekte für die momentane Abstands- und Geschwindigkeitsregelung nicht relevant ist. Andere bekannte Systeme wählen aus den detektierten Objekten genau eines aus, dessen charakteristische, kinematische Größen zur Abstands- und Geschwindigkeitsregelung verwendet werden. Dies führt insbesondere bei Verkehrssituationen, in denen das ausgewählte Zielobjekt die eigene Fahrbahn verläßt oder in denen ein weiteres Fahrzeug sich zwischen das eigene Fahrzeug und das vorausfahrende Zielobjekt einschert zu ungewünschten Regelreaktionen die sich beispielsweise durch Ruckeln, ruckartiges Gasgeben, ruckartiges Gaswegnehmen oder ruckartiges Ansprechen der Verzögerungsmittel äußern kann. Durch die Übertragung der charakteristischen, kinematischen Größen von genau zwei Objekten wird erreicht, dass neben den Größen des ausgewählten Zielobjektes die Größen eines weiteren Objektes übertragen werden können. Hierbei werden insbesondere die kinematischen Größen des Objektes übertragen, das als potentielles zukünftiges Zielobjekt klassifiziert wird. Dadurch kann der Abstands- und Geschwindigkeitsregler bereits frühzeitig auf die neue Situation einregeln, die beispielsweise durch das Einscheren eines Fahrzeuges oder das Ausscheren des Zielobjektes entstehen. Das Regelverhalten eines derart geführten Fahrzeugs verbessert sich hierdurch merklich durch sanfte Übergänge bei sich stark verändernden Regelsituationen.

Die Vorrichtung anzugeben, sieht eine Einrichtung zur Detektion von Objekten, eine Einrichtung zur Zielobjektauswahl sowie eine Einrichtung zur Übermittlung von Daten vor. Die Einrichtung zur Objektdetektion erkennt hierbei die Fahrzeuge und Objekte, die sich im Umgebungsbereich des eigenen Fahrzeugs befinden. Weiterhin ist diese Objektdetektionseinrichtung in der Lage, charakteristische, kinematische Größer der Fahrzeuge zu erfassen, wobei hierunter auch die Größen fallen, die für eine Geschwindigkeitsregelung im Sinne einer Abstandskonstantregelung oder Geschwindigkeitskonstantregelung von besonderem Interesse sind. Die vorgesehene Einrichtung zur Zielobjektauswahl wählt aus den erkannten Objekten das Zielobjekt aus, das für die Regelung von besonderem Interesse ist und das momentane Regelverhalten bestimmt. Weiterhin wählt die Einrichtung zur Zielobjektauswahl ein weiteres Objekt aus, das im weiteren Verlauf als neues Zielobjekt ausgewählt werden könnte und damit die Regeltätigkeit beeinflusst. Die weiterhin vorgesehene Einrichtung zur Übermittlung von Daten leitet die charakteristischen, kinematischen Größen der ausgewählten Objekte an die Regeleinrichtung weiter.

Die Vorrichtung weist zur Regelung der Fahrgeschwindigkeit im Sinne einer Geschwindigkeitskonstantregelung oder Abstandskonstantregelung, mindestens einen Abstands- und Geschwindigkeitsregler, eine Datenaustauscheinrichtung, sowie Ausgabeeinrichtungen zur Weitergabe von Ausgangssignalen auf. Diese Vorrichtung erhält mittels der Datenaustauscheinrichtung charakteristische, kinematische Größen von genau zwei Objekten, die mittels eines Objektdetektionssystems erfaßt wurden und führt diese dem vorgesehenen Abstands- und Geschwindigkeitsregler zu. Der Abstands- und Geschwindigkeitsregler wiederum generiert unter Einbeziehung der charakteristischen, kinematischen Größen Ausgangssignale, mit denen mindestens ein leistungsbestimmendes Stellglied einer Brennkraftmaschine und/oder eine Einrichtung zur Betätigung der Verzögerungsmittel ansteuerbar sind.

Weiterhin sieht die Erfindung ein Verfahren zum Austausch von Signalen zwischen einer ersten Einrichtung und einer zweiten Einrichtung vor, wobei die erste Einrichtung mindestens ein Objektdetektionssystem sowie eine Einrichtung zur Zielobjektauswahl aufweist und die zweite Einrichtung mindestens einen Geschwindigkeits- und Abstandsregler aufweist. Kern des Verfahrens ist es, die vom Objektdetektionssystem erfaßten charakteristischen, kinematischen Größen genau der beiden Objekte, die von der Zielobjektauswahleinrichtung ausgewählt wurden, an die zweiten Einrichtung weiterzuleiten, in der Stellsignale für ein leistungsbestimmendes Stellglied einer Brennkraftmaschine und für eine Ansteuerung der Verzögerungsmittel vorgesehen ist.

Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise handelt es sich bei der Objektdetektionseinrichtung um eine Sende- und Empfangseinheit für Radarstrahlung und/oder eine Sende- und Empfangseinheit für Lidarstrahlung und/oder eine Empfangseinheit für ein Bilderfassungssystem. Hierbei ist es unerheblich, nach welchem Radarverfahren die Sende- und Empfangseinheit für Radarstrahlung arbeitet und für welche Reichweiten diese ausgelegt ist. Prinzipiell kann dieses System mit jeder Radarmodulation oder jeder Radarreichweite arbeiten. Das vorgesehene Bilderfassungssystem ist vorteilhafterweise eine Videokamera, die auch eine Stereoviedeokamera sein, und die im sichtbaren oder auch im infraroten Lichtspektrum Bildinformationen empfangen kann. Auch ist es möglich, für das vorgesehene Bilderfassungssystem eine Beleuchtungseinrichtung vorzusehen, die den gewünschten Erfassungsbereich mit sichtbarem oder auch infrarotem Licht ausleuchtet um die Bilderfassungseigenschaften zu verbessern.

Weiterhin ist es vorteilhaft, dass die charakteristischen, kinematischen Größen, die den übertragenen Daten entsprechen, mindestens eine der Größen Abstand des Objekts zur Objektdetektionseinrichtung, Relativgeschwindigkeit des Objekts in Bezug zur eigenen Fahrzeuggeschwindigkeit oder Absolutgeschwindigkeit des Objektes, Relativbeschleunigung des Objekts bezüglich des eigenen Fahrzeugs oder Absolutbeschleunigung des Objekts, Querversatz des Objekts bezogen auf die Fahrzeuglängsachse oder bezogen auf die Mittelachse der Objektdetektionseinrichtung, Quergeschwindigkeit des Objekts bezüglich der Fahrzeuglängsachse oder der Zentralachse des Objektdetektionssystems, eine eindeutige Objektbezeichnung, Informationen darüber, ob das Objekt erstmalig detektiert wurde oder bereits wiederholt detektiert wurde Informationen über die Funktionsfähigkeit der Objektdetektionseinrichtung, beispielsweise ob diese exakt justiert ist, ob diese verschmutzt ist, ob diese momentan geblendet ist oder ob schlechte Sichtverhältnisse vorliegen, ist.

Erfindungsgemäß sind die erste und die zweite Einrichtung in zwei getrennten Gehäusen untergebracht. Durch die räumliche Trennung der ersten und der zweiten Einrichtung in separaten Gehäusen ist es möglich, einen Sensor vorzusehen, der in Bezug auf die Baugröße sehr klein ist und damit vielseitig einsetzbar ist. In diesem Fall ist das zweite Gehäuse an einem entfernten Ort vorzusehen, an dem ausreichend Platz zur Verfügung steht.

Vorteilhafterweise handelt es sich bei der Vorrichtung zum Austausch von Signalen zwischen der ersten und der zweiten Einrichtung um einen CAN-Bus.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor ablauffähig und zur Ausführung des erfindungsgemäßen Verfahren geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: eine beispielhafte Umgebungssituation für den Einsatz einer adaptiven Abstands- und Geschwindigkeitsregelung,
- Figur 2: ein erstes Ausführungsbeispiel der erfindungsgemäßen Vorrichtung und
- Figur 3: ein weiteres Ausführungsbeispiel der erfindungsgemäßen Vorrichtung.

### Beschreibung von Ausführungsbeispielen

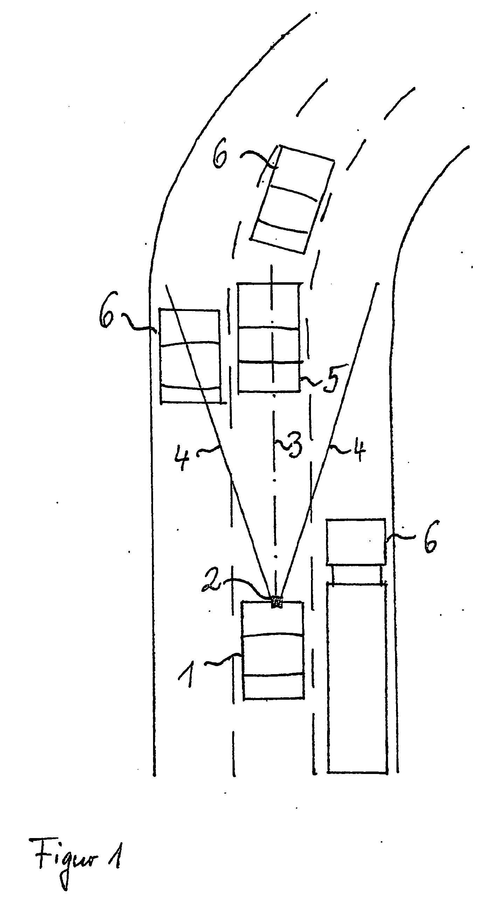

In Figur 1 ist eine beispielhafte Verkehrssituation für den Einsatz eines adaptiven Abstands- und Geschwindigkeitsreglers aufgezeigt. Zu erkennen ist das mit dem adaptiven Abstands- und Geschwindigkeitsregler 2 ausgerüstete Fahrzeug 1, das sich beispielsweise auf der mittleren Fahrspur einer mehrspurigen Straße bewegt. Das üblicherweise an der Frontseite des Fahrzeugs 1 angebrachte Objektdetektionssystem 2, das als Radar-, Lidar- oder Videosystem ausgebildet sein kann, erfaßt die weiteren Objekte im Fahrzeugumfeld, die sich innerhalb des Erfassungsbereichs befinden, dessen Grenzen durch die beiden Linien 4 eingezeichnet sind. Weiterhin ist die Zentralachse 3 des Objekterfassungsbereichs eingezeichnet, die im Falle einer Radar- oder Lidareinrichtung mit der Hauptstrahlrichtung der Sende- und Empfangseinrichtungen zusammenfällt. Aus den Objekten, die durch das Objekterfassungssystem 2 detektiert wurden, wählt eine Zielobjektauswahleinrichtung ein geeignetes Zielobjekt 5 aus. Dieses Zielobjekt ist üblicherweise das direkt vor dem eigenen Fahrzeug vorherfahrende Fahrzeug 5, dessen fahrdynamische Verhalten das Regelverhalten des eigenen Fahrzeugs 1 dominant beeinflusst. Weitere Objekte 6 werden nur insofern erkannt, wenn sie sich innerhalb des Erfassungsbereichs 4 bewegen. Die fahrdynamischen Größen dieser weiteren Objekte 6 erlangen in dem Fall Relevanz, wenn dieses weitere Objekt beispielsweise durch einen geplanten Einschervorgang zwischen das eigene Fahrzeug 1 und das vorherfahrende Fahrzeug 5 plant oder wenn das Zielobjektfahrzeug 5 beispielsweise durch einen Spurwechsel ausschert und ein weiter vorausfahrendes Fahrzeug 6 als neues Zielobjekt identifiziert wird. Für das momentane und das zukünftige Regelverhalten des Fahrzeugs 1 sind somit die fahrdynamischen Größen des momentanen Zielobjekts 5 sowie die fahrdynamischen Größen eines weiteren erkannten Objekts 6, das als potentielles, zukünftiges Zielobjekt erkannt wurde, relevant.

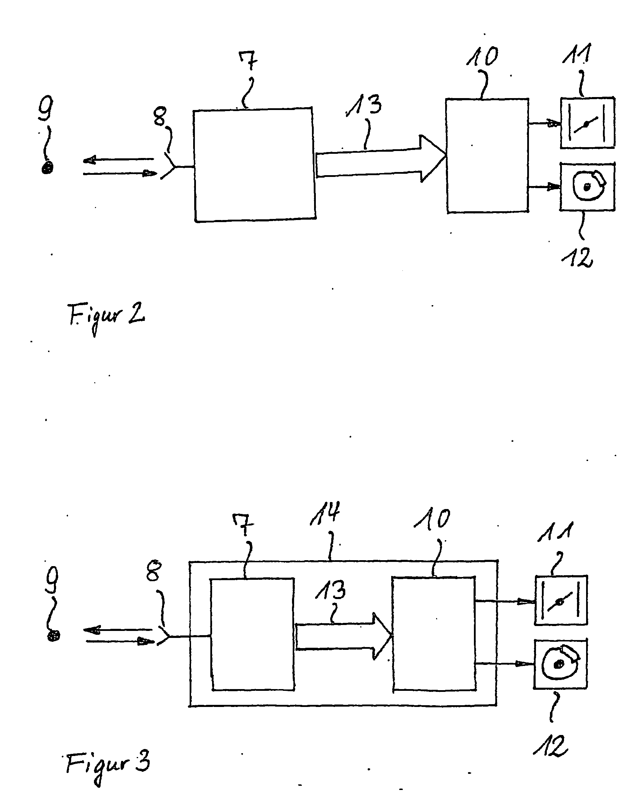

In Figur 2 ist ein erstes Ausführungsbeispiel der erfindungsgemäßen Vorrichtungen abgebildet. Zu erkennen ist eine erste Einrichtung 7, die erfindungsgemäß mindestens eine Objektdetektionseinrichtung sowie eine Zielobjektauswahleinrichtung aufweist. Im Falle, dass das Objektdetektionssystem ein Radar- oder Lidarsystem ist, verfügt diese erste Einrichtung 7 über eine Sende- und Empfangseinrichtung 8. Im Falle eines Objektdetektionssystem in Form einer Bilderfassungseinrichtung repräsentiert das Empfangselement 8 ein reines Empfangssystem, das beispielsweise als Videokamera ausgebildet sein kann. Die Sende- und Empfangseinrichtung 8 sendet Radar- oder Lidarsignale aus, die im Falle eines vorherfahrenden Fahrzeugs an diesem Objekt 5,6 reflektiert wird und zur Sende- und Empfangseinrichtung zurückreflektiert wird. Die Objektdetektionseinrichtung ist hierbei in der Lage, fahrdynamische Größen zu erfassen, wie beispielsweise den Abstand des Objekts 9, die Absolut- oder Relativgeschwindigkeit des Objekts 9 in Bezug auf die Sende- und Empfangseinrichtung 8, die Absolutbeschleunigung oder Relativbeschleunigung des Objekts 9 bezüglich des Objektdetektionssystems, die Quergeschwindigkeit des Objekts 9 bezüglich der Fahrzeuglängsachse oder der Objektdetektionszentralachse 3, sowie Informationen darüber bereitzustellen, ob das Objektdetektionssystem exakt justiert ist, verschmutzt ist, geblendet wird oder schlechte Sichtverhältnisse vorliegen. Die Zielobjektauswahleinrichtung, die in der ersten Einrichtung 7 weiterhin vorgesehen ist, wählt aus den erkannten Objekten 9 das Zielobjekt aus, dessen fahrdynamische Größen dominant auf den Abstands- und Geschwindigkeitsregler einwirken. Weiterhin wählt die Zielobjektauswahleinrichtung ein weiteres erkanntes Objekt aus, das als potentielles zukünftiges Zielobjekt identifiziert wurde. Hierbei kommen insbesondere Objekte 9 in Betracht, die zwischen das eigene Fahrzeug 1 und das Zielobjekt 5 einscheren oder es kommen vor dem Zielobjekt 5 vorherfahrende Objekte 6 in Betracht, für den Fall, dass das Zielobjekt 5 aus der momentanen Fahrspur ausschert und nicht mehr als Zielobjekt geeignet ist. Die charakteristischen, kinematischen bzw. fahrdynamischen Größen dieser beiden, von der Zielobjektauswahleinrichtung ausgewählten Objekte werden über eine Vorrichtung zum Datenaustausch 13 an eine zweite Einrichtung 10 weitergeleitet. Diese zweite Einrichtung 10 weist mindestens einen Geschwindigkeits- und Abstandsregler auf. Dieser Abstands- und Geschwindigkeitsregler arbeitet im Fall, dass kein vorherfahrendes Objekt erkannt wurde als Konstantgeschwindigkeitsregler bzw. im Fall, dass mindestens ein vorherfahrendes Objekt 5 erkannt wurde als Konstantabstandsregler. Hierzu werden die mittels der Datenaustauscheinrichtung 13 übermittelten fahrdynamischen Größen an den Abstands- und Geschwindigkeitsregler weitergeleitet, der zwei Ausgangssignale erzeugt, die das Verhalten beeinflussen. Diese beiden Ausgangsgrößen sind insbesondere eine Ausgangsgröße zur Steuerung einer leistungsbestimmenden Stelleinrichtung für eine Brennkraftmaschine 11, insbesondere eine elektrisch betätigte Drosselklappe oder ein elektrisch gesteuertes Einspritzsystem sowie ein Steuersignal zur Ansteuerung der Verzögerungsmittel 12 des Fahrzeugs 1. Durch die Maßnahme, dass die erste Einrichtung 7 an die zweiten Einrichtung 10 mittels der Datenaustauscheinrichtung 13 nur die fahrdynamischen Größen zweier erkannter Objekte überträgt, wird das Datenaufkommen zwischen der ersten Einrichtung 7 und der zweiten Einrichtung 10 niedrig gehalten im Vergleich zu Systemen, die fahrdynamische Größen bezüglich aller erkannter Objekte übertragen. Im Vergleich zu Systemen, die nur die fahrdynamischen Größen des Zielobjekts 5 übertragen, ergibt sich insbesondere in Fahrsituationen, in denen das Zielobjekt 5 gewechselt wird ein besseres Regelverhalten, da die fahrdynamischen Größen des potentiellen neuen Zielobjekts bereits vor dem Zielobjektwechsel des Abstands- und Geschwindigkeitsreglers zur Verfügung stehen. Durch den modularen Aufbau dieses adaptiven Geschwindigkeits- und Abstandsreglers ist es möglich, die erste Einrichtung 7 und die zweiten Einrichtung 10 in separaten Gehäusen vorzusehen, wodurch die erste Einrichtung in kleiner Bauform an der Fahrzeugfront montiert werden kann und die zweite Einrichtung 10 an einem günstigen Platz an anderer Stelle im Fahrzeug eingebaut werden kann.

In Figur 3 ist eine weitere Ausführungsform der erfindungsgemäßen Vorrichtungen dargestellt. Zu erkennen ist wiederum die erste Einrichtung 7, die mindestens ein Objektdetektionssystem sowie eine Zielobjektauswahleinrichtung aufweist. Durch das Sende- und Empfangselement 8, das im Fall eines Bilderkennungssystems auch als reines Empfangselement ausgeführt sein kann, werden Radar- oder Lidarstrahlen ausgesendet, die an einem vorherfahrenden Objekt 9 reflektiert werden und vom Empfangselement 8 empfangen werden. Die Zielobjektauswahleinrichtung wählt aus den erkannten Objekten ein Zielobjekt aus, das das Reglerverhalten des Abstands- und Geschwindigkeitsreglers dominant beeinflußt, sowie ein weiteres, potentielles zukünftiges Zielobjekt aus. Mittels der Datenaustauscheinrichtung 13 werden die fahrdynamischen Größen dieser beiden ausgewählten Objekte an die zweite Einrichtung 10 weitergeleitet. In dieser zweiten Einrichtung 10, die mindestens einen Abstands- und Geschwindigkeitsregler aufweist, wird aus den übermittelten, fahrdynamischen Größen der beiden ausgewählten Objekte zum einen ein Ausgangssignal für ein leistungsbestimmendes Stellelement einer Brennkraftmaschine 11 erzeugt sowie weiterhin ein Ausgangssignal zur Steuerung der Verzögerungsmittel 12 des Fahrzeugs erzeugt.

Weiterhin ist es auch denkbar, zwei erste Einrichtungen 7 vorzusehen, die über Datenaustauscheinrichtungen 13 an eine gemeinsame zweiten Einrichtung 10 Daten übermittelt, wodurch eine sehr universelle Verwendung dieses Systems erreicht wird. Durch das Übertragen der fahrdynamischen Größen zweier Objekte ist der Abstands- und Geschwindigkeitsregler, der in der zweiten Einrichtung 10 vorgesehen ist, unabhängig von den Auswahlkriterien der Zielobjektauswahleinrichtung in der ersten Einrichtung 7, wodurch in komplexen Verkehrssituationen eine verbesserte Regelfunktion erreicht wird. Durch den modularen Aufbau wird weiterhin eine bessere Austauschbarkeit des Objektdetektionssystems sowie der Regeleinheit, die unmittelbar auf Aktuatoren 11, 12 einwirkt, erreicht.

## Patentansprüche

1. Vorrichtung zur adaptiven Geschwindigkeitsregelung eines Kraftfahrzeugs im Sinne einer Abstandskonstantregelung beziehungsweise einer Geschwindigkeitskonstantregelung, aufweisend mindestens zwei Einrichtungen, die mittels einer Datenaustauscheinrichtung (13) verbunden sind, wobei die erste Einrichtung (7) mindestens eine Objektdetektionseinrichtung sowie mindestens eine Zielobjektauswahleinrichtung aufweist und die zweite Einrichtung (10) mindestens einen Geschwindigkeits- und Abstandsregler aufweist, **dadurch gekennzeichnet, dass** die erste und die zweite Einrichtung in zwei getrennten Gehäusen untergebracht sind und dass die Datenaustauscheinrichtung (13) Daten in Form von charakteristischen, kinematischen Größen bezüglich genau zweier detektierter Objekte (9) zur weiteren Verarbeitung an den Geschwindigkeits- und Abstandsregler überträgt, so dass neben den Größen des ausgewählten Zielobjekts (5) die Größen des weiteren Objekts (6) übertragen werden und dass der Geschwindigkeits- und Abstandsregler aus den charakteristischen, kinematischen Größen der beiden ausgewählten, detektierten Objekte (9) Ausgangssignale erzeugt, mit denen eine leistungsbestimmende Stelleinrichtung einer Brennkraftmaschine (11) oder ein Stellglied von Verzögerungsmitteln (12) angesteuert werden.

2. Vorrichtung nach Anspruch 1, **dadurch gekennzeichnet, dass** die Objektdetektionseinrichtung eine Sende- und Empfangseinheit für Radarstrahlung ist und/oder eine Sende- und Empfangseinheit für Lidarstrahlung ist und/oder eine Empfangseinheit für ein Bilderfassungssystem ist.

3. Vorrichtung nach einem der vorhergehenden Ansprüche, **dadurch gekennzeichnet, dass** die übertragenen Daten mindestens eine der kinetischen Größen
- Abstände der Objekte zur Objektdetektionseinrichtung,
- Relativgeschwindigkeiten der Objekte zur Objektdetektionseinrichtung,
- Absolutgeschwindigkeiten der Objekte,
- Relativbeschleunigungen der Objekte bezüglich der Objektdetektionseinrichtung,
- Absolutbeschleunigungen der Objekte,
- Querversatz der Objekte bezogen auf die Fahrzeuglängsachse oder bezogen auf die Zentralachse der Objektdetektionseinrichtung,
- Quergeschwindigkeiten der Objekte bezüglich der Fahrzeuglängsachse oder der Zentralachse der Objektdetektionseinrichtung,
- Informationen ob das Objekt erstmalig detektiert wurde oder wiederholt detektiert wurde,
- eindeutige Objektbezeichnung,
- Information über die Funktionsfähigkeit der Objektdetektionseinrichtung, ob diese justiert ist, verschmutzt ist, geblendet ist oder schlechte Sichtverhältnisse vorliegen,
repräsentieren.

4. Vorrichtung nach einem der vorhergehenden Ansprüche, **dadurch gekennzeichnet, dass** die Vorrichtung zum Austausch von Signalen ein CAN-Bus ist.

5. Verfahren zum Austausch von Signalen zwischen einer ersten Einrichtung, die mindestens eine Objektdetektionseinrichtung zur Detektion von Objekten und mindestens eine Einrichtung zur Zielobjektauswahl aufweist und einer zweiten Einrichtung, die mindestens einen Geschwindigkeits- und Abstandsregler aufweist, **dadurch gekennzeichnet, dass** die erste und die zweite Einrichtung in zwei getrennten Gehäusen untergebracht werden und dass zwischen der ersten und der zweiten Einrichtung Daten von genau zwei detektierten Objekten übertragen werden, so dass neben den Größen des ausgewählten Zielobjekts (5) die Größen des weiteren Objekts (6) übertragen werden und dass durch den Geschwindigkeits - und Abstandsregler aus den charakteristischen, Kinematischen Größen der beiden ausgewählten, detektierten Objekte (9) Ausganssignale erzeugt, werden, mit denen eine Leistungsbestimmende Stell einrichtung einer Brennkraftmaschine (11) oder ein Stellglied von Verzögerungsmitteln (12) angesteuert werden.

6. Verfahren nach Anspruch 5, **dadurch gekennzeichnet, dass** die übertragenen Daten mindestens eine der Größen
- Abstände der Objekte zur Objektdetektionseinrichtung,
- Relativgeschwindigkeiten der Objekte zur Objektdetektionseinrichtung,
- Absolutgeschwindigkeiten der Objekte,
- Relativbeschleunigungen der Objekte bezüglich der
Objektdetektionseinrichtung,
- Absolutbeschleunigungen der Objekte,
- Querversatz der Objekte bezogen auf die Fahrzeuglängsachse oder bezogen auf die Zentralachse der Objektdetektionseinrichtung,
- Quergeschwindigkeiten der Objekte bezüglich der Fahrzeuglängsachse oder der Zentralachse der Objektdetektionseinrichtung,
- Informationen ob das Objekt erstmalig detektiert wurde oder wiederholt detektiert wurde,
- eindeutige Objektbezeichnung,
- Information über die Funktionsfähigkeit der Sende- und Empfangseinrichtung, ob diese justiert ist, verschmutzt ist, geblendet ist oder schlechte Sichtverhältnisse vorliegen,
repräsentieren.

## Claims

1. Adaptive cruise control device for a motor vehicle for regulating the inter-vehicle distance to a constant value or regulating the speed to a constant value, having at least two apparatuses, which are connected by means of a data-exchanging apparatus (13), wherein the first apparatus (7) has at least one object-detection apparatus and at least one target-object-selecting apparatus, and the second apparatus (10) has at least one speed and inter-vehicle distance regulator, **characterized in that** the first and second apparatuses are accommodated in two separate housings, and **in that** the data-exchanging apparatus (13) transmits data in the form of characteristic, kinematic variables relating to precisely two detected objects (9) to the speed and inter-vehicle distance regulator for further processing, with the result that, in addition to the variables of the selected target object (5), the variables of the further object (6) are transmitted, and that the speed and inter-vehicle distance regulator generates, from the characteristic, kinematic variables of the two selected, detected objects (9), output signals with which a power-determining actuator apparatus of an internal combustion engine (11) or an actuator element of deceleration means (12) are driven.

2. Device according to Claim 1, **characterized in that** the object-detection apparatus is a transceiver unit for radar radiation and/or a transceiver unit for lidar radiation and/or a receiver unit for an image-capturing system.

3. Device according to one of the preceding claims, **characterized in that** the transmitted data represent at least one of the kinetic variables of:
- distances between the objects and the object-detection apparatus,
- relative speeds of the objects with respect to the object-detection apparatus,
- absolute speeds of the objects,
- relative acceleration values of the objects with respect to the object-detection apparatus,
- absolute acceleration values of the objects,
- lateral offset of the objects with respect to the longitudinal axis of the vehicle or with respect to the central axis of the object-detection apparatus,
- lateral speeds of the objects with respect to the longitudinal axis of the vehicle or the central axis of the object-detection apparatus,
- information as to whether the object has been detected for the first time or has been detected repeatedly,
- unambiguous designation of objects,
- information about the functional capability of the object-detection apparatus, as to whether it is aligned, soiled, screened or poor visibility conditions are present.

4. Device according to one of the preceding claims, **characterized in that** the device for exchanging signals is a CAN bus.

5. Method for exchanging signals between a first apparatus, which has at least one object-detection apparatus for detecting objects and at least one apparatus for target object selection, and a second apparatus, which has at least one speed and inter-vehicle distance regulator, **characterized in that** the first and second apparatuses are accommodated in two separate housings and **in that** between the first and second apparatus data from precisely two detected objects are transmitted, with the result that, in addition to the variables of the selected target object (5), the variables of the further object (6) are transmitted, and that output signals are generated by the speed and inter-vehicle distance regulator from the characteristic, kinematic variables of the two selected, detected objects (9), with which output signals a power-determining actuator apparatus of an internal combustion engine (11) or an actuator element of deceleration means (12) are driven.

6. Method according to Claim 5, **characterized in that** the transmitted data represent at least one of the variables of:
- distances between the objects and the object-detection apparatus,
- relative speeds of the objects with respect to the object-detection apparatus,
- absolute speeds of the objects,
- relative acceleration values of the objects with respect to the object-detection apparatus,
- absolute acceleration values of the objects,
- lateral offset of the objects with respect to the longitudinal axis of the vehicle or with respect to the central axis of the object-detection apparatus,
- lateral speeds of the objects with respect to the longitudinal axis of the vehicle or the central axis of the object-detection apparatus,
- information as to whether the object has been detected for the first time or has been detected repeatedly,
- unambiguous designation of objects,
- information about the functional capability of the transceiver apparatus, as to whether it is aligned, soiled, screened or poor visibility conditions are present.

## Revendications

1. Appareil de régulation de vitesse adaptative d'un véhicule automobile dans le sens d'une régulation constante de la distance ou d'une régulation constante de la vitesse, présentant au moins deux dispositifs qui sont reliés au moyen d'un dispositif d'échange de données (13), le premier dispositif (7) présentant au moins un dispositif de détection d'objet et au moins un dispositif de sélection d'objet ciblé et le deuxième dispositif (10) présentant au moins un régulateur de vitesse et de distance, **caractérisé en ce que** le premier et le deuxième dispositifs sont logés dans deux boîtiers séparés, et **en ce que** le dispositif d'échange de données (13) transmet des données au régulateur de vitesse et de distance sous la forme de grandeurs caractéristiques cinématiques relatives à exactement deux objets détectés (9) en vue d'un traitement postérieur, de sorte que les grandeurs de l'objet supplémentaire (6) sont transmises en plus des grandeurs de l'objet ciblé (5) sélectionné et que le régulateur de vitesse et de distance génère, à partir des grandeurs caractéristiques cinématiques des deux objets détectés (9) sélectionnés, des signaux de sortie avec lesquels peuvent être commandés un dispositif de réglage déterminant la puissance d'un moteur à combustion interne (11) ou un élément de commande de moyens de ralentissement (12).

2. Appareil selon la revendication 1, **caractérisé en ce que** le dispositif de détection d'objet est une unité d'émission et de réception d'un rayonnement radar et/ou une unité d'émission et de réception d'un rayonnement lidar et/ou une unité de réception pour un système d'acquisition d'image.

3. Appareil selon l'une des revendications précédentes, **caractérisé en ce que** les données transmises représentent au moins l'une des grandeurs cinétiques
- écarts entre les objets et le dispositif de détection d'objet,
- vitesses relatives des objets par rapport au dispositif de détection d'objet,
- vitesses absolues des objets,
- accélérations relatives des objets par rapport au dispositif de détection d'objet,
- accélérations absolues des objets,
- décalage transversal des objets par rapport à l'axe longitudinal du véhicule ou par rapport à l'axe central du dispositif de détection d'objet,
- vitesses transversales des objets par rapport à l'axe longitudinal du véhicule ou à l'axe central du dispositif de détection d'objet,
- informations indiquant si l'objet a été détecté pour la première fois ou s'il a été détecté de manière répétitive,
- désignation explicite de l'objet,
- information si l'aptitude fonctionnelle du dispositif de détection d'objet, si celui-ci est réglé, encrassé, masqué ou s'il existe de mauvaises conditions de visibilité.

4. Appareil selon l'une des revendications précédentes, **caractérisé en ce que** l'appareil d'échange de signaux est un bus CAN.

5. Procédé pour échanger des signaux entre un premier dispositif, qui présente au moins un dispositif de détection d'objet pour détecter des objets et au moins un dispositif de sélection d'objet ciblé, et un deuxième dispositif qui présente au moins un régulateur de vitesse et de distance, **caractérisé en ce que** le premier et le deuxième dispositifs sont logés dans deux boîtiers séparés et **en ce que** les données relatives à exactement deux objets détectés sont transmises entre le premier et le deuxième dispositif, de sorte que les grandeurs de l'objet supplémentaire (6) sont transmises en plus des grandeurs de l'objet ciblé (5) sélectionné et que des signaux de sortie sont générés par le régulateur de vitesse et de distance à partir des grandeurs caractéristiques cinématiques des deux objets détectés (9) sélectionnés, avec lesquels signaux de sortie peuvent être commandés un dispositif de réglage déterminant la puissance d'un moteur à combustion interne (11) ou un élément de commande de moyens de ralentissement (12).

6. Procédé selon la revendication 5, **caractérisé en ce que** les données transmises représentent au moins l'une des grandeurs
- écarts entre les objets et le dispositif de détection d'objet,
- vitesses relatives des objets par rapport au dispositif de détection d'objet,
- vitesses absolues des objets,
- accélérations relatives des objets par rapport au dispositif de détection d'objet,
- accélérations absolues des objets,
- décalage transversal des objets par rapport à l'axe longitudinal du véhicule ou par rapport à l'axe central du dispositif de détection d'objet,
- vitesses transversales des objets par rapport à l'axe longitudinal du véhicule ou à l'axe central du dispositif de détection d'objet,
- informations indiquant si l'objet a été détecté pour la première fois ou s'il a été détecté de manière répétitive,
- désignation explicite de l'objet,
- information sur l'aptitude fonctionnelle du dispositif d'émission et de réception, si celui-ci est réglé, encrassé, masqué ou s'il existe de mauvaises conditions de visibilité.
